# DEMANDE DE BREVET EUROPEEN

(11) **EP 1 052 416 A1**
(43) Date de publication de la demande: **15.11.2000**
(21) Numéro de dépôt: 00110061.9
(22) Date de dépôt: 12.05.2000
(51) Int. Cl.: F16B 19/10

(54) **Rivet pour l'assemblage de pièces adjacentes formant un rivet étanche et procédé d'étanchéisation**

(30) Priorité: 14.05.1999 FR 9906265
(71) Demandeur: Joux, Jean-Claude, 06140 Tourettes sur Loup (FR)
(72) Inventeur: Joux, Jean-Claude, 06140 Tourettes sur Loup (FR)
(74) Mandataire: Hautier, Jean-Louis

(57) **Abrégé**

La présente invention concerne un rivet (1) pour l'assemblage de pièces adjacentes comportant un clou introduit dans un corps et servant d'élément de traction.

Selon l'invention, le rivet (1) présente une substance visqueuse (4) d'étanchéité placée entre le clou et le corps et permettant de colmater le volume interstitiel résiduel entre le corps et le clou après la traction pour former un rivet (1) étanche.

L'invention concerne en outre un procédé d'étanchéisation apte à mettre en oeuvre ledit rivet (1).

Application à la fabrication, à la mise en oeuvre de rivets aux propriétés étanches.

## Description

La présente invention concerne un rivet pour l'assemblage de pièces adjacentes.

Elle concerne également un procédé d'étanchéisation d'un rivet. Le procédé est apte à mettre en oeuvre le rivet selon l'invention.

L'invention trouvera tout particulièrement son application dans le domaine de la fabrication des rivets présentant des propriétés d'étanchéité.

*Dans ce cadre, on connaît déjà des rivets permettant une certaine étanchéité. Le document N*^{*o*} *EP A 0 433 938 concerne un dispositif de fixation autoperforant destiné à des liaisons par rivets découpants, étanches à l'eau et/ou aux gaz et qui se composent d'un rivet perforant et d'une contre-bouterolle. Le rivet présente une gorge annulaire avec une bague d'étanchéité circulaire sur la face inférieure de la tête du rivet, à proximité immédiate de la partie de la tige du rivet se raccordant à la tête du rivet*.

De tels rivets ne donnent pas entière satisfaction. En effet, l'élément d'étanchéité est ici constitué par un élément supplémentaire sous forme d'une bague ou encore d'un joint circulaire notamment en élastomère.

Il s'agit d'une pièce supplémentaire nécessitant un surcoût et une étape d'assemblage.

Par ailleurs, l'utilisation de tels joints ou bagues d'étanchéité nécessite un logement spécifique pour recevoir l'élément assurant l'étanchéité. Ce dispositif n'est donc pas adaptable à tout type de rivets.

De plus, le rivet proposé selon l'état de la technique n'est pas étanche de façon interne. Il nécessite la réalisation uniquement de rivets aveugles.

La présente invention a pour objet de remédier aux inconvénients des dispositifs actuels et présente pour ce faire un rivet de conception très avantageuse.

Tout d'abord, l'invention a vaincu le préjugé selon lequel l'élément assurant l'étanchéité doit être formé d'un élément solide dans le domaine d'application des rivets. En effet, les joints actuellement connus sont solides en matière élastomère ou en caoutchouc. Au contraire, l'invention se propose d'utiliser une substance d'étanchéité visqueuse.

Les avantages de l'invention sont nombreux, notamment en ce qui concerne la facilité du montage et l'étanchéité très efficace, réalisée au sein même du rivet, en excluant tout risque de tréfilage.

La présente invention concerne un rivet pour l'assemblage de pièces adjacentes, comportant un clou introduit dans un corps et servant d'élément de traction caractérisé par le fait qu'il présente une substance visqueuse d'étanchéité placée entre le clou et le corps et permettant de colmater le volume interstitiel résiduel entre le corps et le clou après la traction, pour former un rivet étanche.

L'invention pourra se présenter sous les différents modes de réalisation énoncés ci-après :
- la substance d'étanchéité est du silicone.
- la surface interne du corps comporte un bourrelet apte à :
   - essuyer le clou lors de l'opération d'assemblage,
   - retenir la substance d'étanchéité dans le corps lors de la traction.
- Le bourrelet est formé par un rétreint du corps a distance prédéterminée de la tête.

La substance d'étanchéité est une substance résistant aux hydrocarbures.

L'invention concerne également un procédé d'étanchéisation d'un rivet comportant un clou introduit dans un corps et servant d'élément de traction caractérisé par le fait qu'il consiste :
- à enduire d'une substance visqueuse d'étanchéité la surface externe du clou sur une certaine longueur sous sa tête ;
- à introduire le clou ainsi enduit dans le corps du rivet, la surface interne du corps venant en regard de la surface externe du clou enduite,
- à procéder à la traction du clou pour fixer le rivet et colmater le volume interstitiel résiduel entre le corps et le clou.

Les dessins ci-joints sont donnés à titre d'exemples indicatifs et non limitatifs. Ils représentent un mode de réalisation. Ils permettront de comprendre aisément l'invention.
La figure 1 illustre les éléments constitutifs du rivet selon l'invention avant assemblage.
Les figures 2 et 3 présentent un rivet selon l'invention dans un mode particulier de réalisation.
Les figures 4 et 5 présentent un rivet avant traction dans deux cas où l'épaisseur des pièces adjacentes à assembler diffère.
Les figures 6 et 7 présentent les rivets, respectivement des figures 4 et 5, après traction.

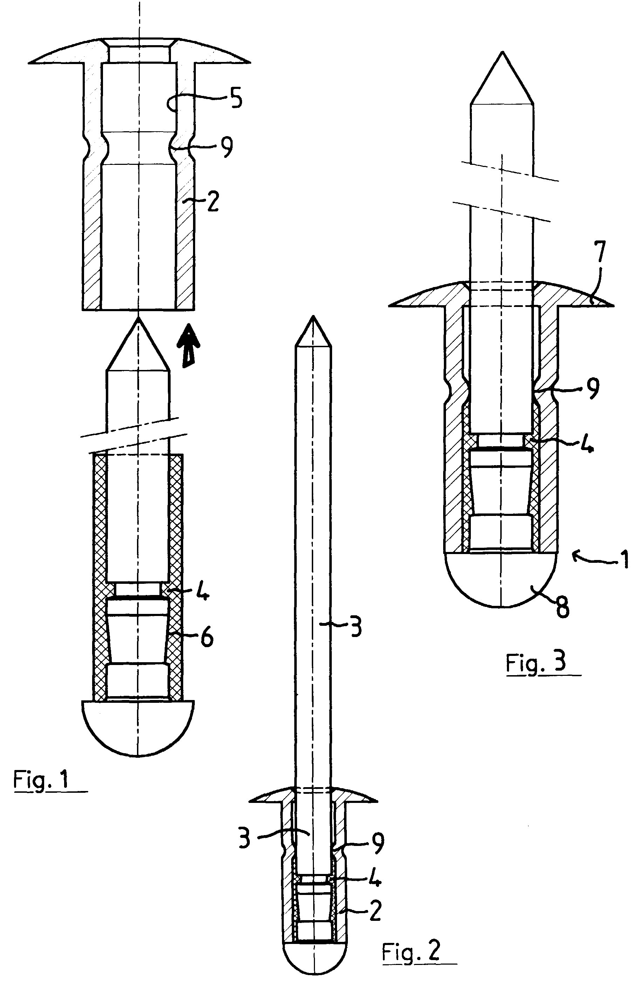

Tel que cela apparaît en figure 1, le rivet 1 selon l'invention comprend tout d'abord un corps 2 et un clou 3 susceptible d'être introduit dans le corps 2.

De façon connue, le clou sert d'élément de traction pour la fixation du rivet.

Tel que représenté en figure 3, le corps 2 comporte une tête 7 permettant l'appui sur l'une (11) des pièces adjacentes (10, 11) à assembler.

Le clou 3 comporte quant à lui une tête 8 permettant de venir en appui sur l'une des extrémités du corps 2. Cet appui apparaît notamment en figure 3.

Selon l'invention, une substance visqueuse d'étanchéité 4 est intercalée entre le clou 3 et le corps 2. Comme cela apparaît aux figures 2 et 3, la substance 4 permet de colmater le volume interstitiel résiduel entre le corps 2 et le clou 3.

Ce colmatage est finalisé après la traction du rivet.

On pourra utiliser différentes substances 4 pour réaliser le colmatage.

Dans un mode préféré, la substance sera du silicone présentant une bonne viscosité et s'appliquant par conséquent de façon efficace sur le clou 3.

Cependant, d'autres substances sont utilisables notamment si elles présentent une bonne viscosité ou une résistance aux hydrocarbures.

Pour mettre en place la substance 4, on l'appliquera préférentiellement sur la surface extérieure 6 du clou 3 avant son introduction dans le corps 2. Ce mode préférentiel de réalisation est illustré en figure 1.

La distance sur laquelle la surface 6 doit être enduite de la substance 4 sera évidemment fonction de la longueur du corps 2.

Tel que cela apparaît également aux figures 1 à 3, le profil du clou 3 sera variable et notamment présentera des variations de diamètre pour régler la valeur de la résistance à la rupture du clou.

Lors de la traction, un blocage de la substance 4 entre la surface interne 5 du corps 2 et la surface externe 6 du clou 3 est formé.

Dans le mode préférentiel illustré aux figures 1 à 3, un bourrelet 9 est constitué sur la surface interne 5 du corps afin de favoriser la rétention de la substance 4 lors de la traction et l'essuyage du clou 3 lors de l'assemblage par introduction dans le corps 2.

Comme illustré aux figures, le bourrelet 9 pourra être constitué par le biais d'un rétreint du corps 2.

La position du bourrelet 9 sur le corps 2 ajustera la longueur sur laquelle la substance 4 sera appliquée et colmatée.

On présente ci-après un procédé particulier pour l'étanchéisation d'un rivet.

Dans un premier temps, on enduit d'une substance visqueuse d'étanchéité 4 la surface externe G du clou 3. Cet enduit est réalisé sur une longueur prédéterminée sous la tête 8 du clou 3.

Par la suite, on introduit le clou 3 dans le corps 2 du rivet 1. La substance 4 se retrouve intercalée entre le corps 2 et le clou 3.

Enfin, on procède à la traction du clou 3 pour fixer le rivet 1. Durant cette opération, un colmatage automatique du volume interstitiel résiduel entre le corps 2 et le clou 3 est réalisé.

Une étanchéisation du rivet 1 au coeur même du rivet est ainsi réalisé sans nécessité de faire appel à des joints d'étanchéité spécifique.

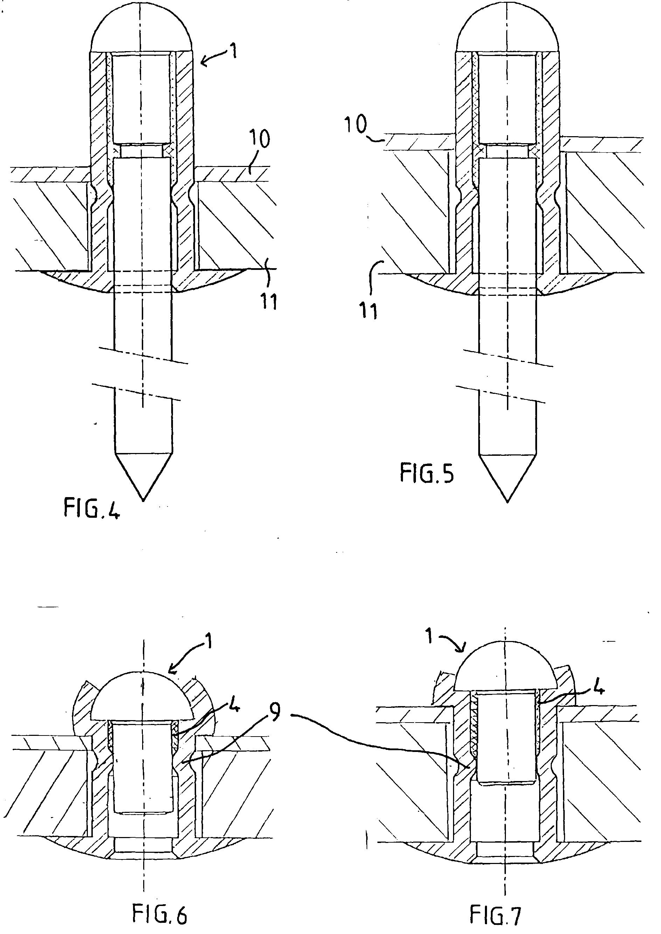

La figure 4 et 6 montrent la rétention de la substance 4 après la traction du rivet 1, pour une épaisseur donnée des pièces 10, 11.

Les figures 5 et 7 présentent le cas d'une épaisseur différente.

La fonction du bourrelet 9 apparaît notamment pour la rétention de la substance 4.

Préférentiellement, le clou aura un profil rectiligne comme représenté aux figures 4 à 7 pour assurer un bon contact avec le bourrelet 9.

### REFERENCES

- 1.: Rivet
- 2.: Corps
- 3.: Clou
- 4.: Substance d'étanchéité
- 5.: Surface interne du corps
- 6.: Surface externe du clou
- 7.: Tête du corps
- 8.: Tête du clou
- 9.: Bourrelet
- 10.: Pièce adjacente
- 11.: Pièce adjacente

## Revendications

1. Rivet (1) pour l'assemblage de pièces adjacentes, comportant un clou (3) introduit dans un corps (2) et servant d'élément de traction, caractérisé par le fait
qu'il présente une substance visqueuse (4) d'étanchéité placée entre le clou (3) et le corps (2) et permettant de colmater le volume interstitiel résiduel entre le corps (2) et le clou (3) après le traction, pour former un rivet (1) étanche et
que la surface interne (5) du corps comporte un bourrelet (9) apte à essuyer le clou (3) lors de l'opération d'assemblage et à retenir la substance d'étanchéité (4) dans le corps (2) lors de la traction.

2. Rivet (1) selon la revendication 1, caractérisé par le fait
que la substance d'étanchéité (4) est du silicone.

3. Rivet (1) selon l'une quelconque des revendications 1 ou 2 caractérisé par le fait
que le bourrelet (9) est formé par un rétreint du corps (2) à une distance prédéterminée de la tête (7).

4. Rivet (1) selon la revendication 1 caractérisé par le fait
que la substance d'étanchéité (4) est une substance résistant aux hydrocarbures.

5. Procédé d'étanchéisation d'un rivet (1) comportant un clou (3) introduit dans un corps (2) et servant d'élément de traction caractérisé par le fait
qu'on utilise un rivet selon l'une quelconque des revendications 1 à 4 et
qu'il consiste :
- à enduire d'une substance visqueuse d'étanchéité (4) la surface externe (6) du clou (3) sur une certaine longueur sous sa tête (8) ;
- à introduire le clou (3) ainsi enduit dans le corps (2) du rivet (1), la surface interne (5) du corps (2) venant en regard de la surface externe (6) du clou (3) enduite,
- à procéder à la traction du clou (3) pour fixer le rivet (1) et colmater le volume interstitiel résiduel entre le corps (2) et le clou (3).
